# EUROPEAN PATENT APPLICATION

(11) **EP 2 687 401 A2**
(43) Date of publication of application: **22.01.2014**
(21) Application number: 13003602.3
(22) Date of filing: 17.07.2013
(51) Int. Cl.: B60N 2/26

(54) **A tensioning arrangement for a child restraint**

(30) Priority: 17.07.2012 AU 2012903051
(71) Applicant: Britax Childcare Pty Ltd., Sunshine, VIC 3020 (AU)
(72) Inventor: Lumley, Mike, Sunshine, Victoria 3020 (AU); Purchas, Mark, Sunshine, Victoria 3020 (AU); Beaumont, Andrew, Sunshine, Victoria 3020 (AU)
(74) Representative: Bosch, Matthias

(57) **Abstract**

The present invention relates to a child restraint comprising a body, a safety harness including at least one shoulder strap for securing an occupant to the body, and a link means for linking the shoulder strap to a tethering means for anchoring the child restraint with respect to an anchor point, and wherein the link means is operative to tension the or each shoulder strap responsive to any loading of the tethering means.

## Description

### PRIORITY DOCUMENTS

The present application claims priority from:
Australian Provisional Patent Application No. 2012903051 titled "IMPROVED TETHER STRAP ARRANGEMENT" and filed on 17 July 2012.
The content of each this application is hereby incorporated by reference in its entirety.

### TECHNICAL FIELD

The present invention relates to a child restraint for use in a vehicle.

### BACKGROUND

Child restraints have been developed to improve the safety of children traveling in vehicles. A variety of different types of child restraints have been developed for this purpose, with most child restraints consisting of a seat or chair which is supported on a rear seat of a vehicle, for receiving the child therein. There exists a variety of types of child safety seats that are approved for use with children of a variety of ages and/or sizes.

Type A seats typically refer to rear facing seats or capsules suitable for accommodating babies/infants up to around 6 months of age and/or 70 cm in length and up to 12 kg.

Type B seats typically refer to forward facing seats used to accommodate toddlers and young children from approximately 6 months to 4 years, or from 8 - 18 kg.

Type E seats typically refer to boosted seats and booster cushions used to accommodate children between 4 - 8 years old, or approximately from 14 - 32 kg, and which are typically used in c combination with the vehicle seat belt.

Some seats may be a combination type A/B or B/E to accommodate a child as the child grows thereby avoiding the need to purchase, or otherwise source, a variety of different seats to accommodate a growing child.

In many child safety seats, the child is restrained in the safety seat by a harness connected to a body or shell of the safety seat. The seat shell itself is typically connected to the vehicle by means of the vehicle seat belt and a tether strap connected to the shell and extending to a vehicle anchorage point, where the tether strap is attached thereto using a latching hook connector.

The safety of the occupant is compromised in any instances where excursion of their head from within the protective confines of the child safety seat is permitted.

It is against this background that the problems and difficulties associated therewith that the present invention has been developed.

Other objects and advantages of the present invention will become apparent from the following description, taken in connection with the accompanying drawings, wherein, by way of illustration and example, an embodiment of the present invention is disclosed.

### SUMMARY

According to a first aspect, there is provided a child restraint comprising a body, a safety harness including at least one shoulder strap for securing an occupant to the body, a tethering means for anchoring the child restraint with respect to an anchor point and so operatively associated with the or each shoulder strap as to tension the or each shoulder strap responsive to any loading of the tethering means.

In a further aspect, there is provided a child restraint comprising a body, a safety harness including at least one shoulder strap for securing an occupant to the body, and a link means for linking the shoulder strap to a tethering means for anchoring the child restraint with respect to an anchor point, and wherein the link means is operative to tension the or each shoulder strap responsive to any loading of the tethering means.

In one form, the safety harness comprises a pair of shoulder straps, and the link means is operative to tension both shoulder straps responsive to any loading of the tethering means.

In one form, in an alternative, the safety harness comprises a pair of shoulder straps, and there is for each shoulder strap a link means operative to tension its respective shoulder strap responsive to any loading of the tethering means.

In one form, the link means comprises a reinforcement means operative to reinforce the body of the child restraint.

In one form, the link means comprises a structural element.

In one form, the body is a seat body. In an alternative, the body is an infant capsule body.

In one form, the body comprises a base portion and a seat back portion, and the link means is associated with seat back portion.

In one form, the link means comprises an elongate structural element which extends transversely across at least a portion of the seat back portion of the body.

In one form, the structural element comprises a rod or bar.

In one form, the tethering element attaches with respect to the structural element, and the or each shoulder strap at least extends over the structural element.

In one form, the link means comprises attachment means operative to attach the tethering means to the structural element.

In one form, the tethering means comprises a tether strap.

In one form, the tether strap is a split tether strap.

In one form, the body is molded from an engineering plastic.

In one form, the link means comprises attachment means operative to attach the tethering means to the structural element.

In one form, the attachment means comprises tensioning means operative to further tighten the or each shoulder strap in response to loading of the tethering means.

In one form, the tensioning means comprises a mechanical linkage.

In one form, the mechanical linkage comprises a lever mechanism having a fulcrum positioned at or about an axis of elongation of the structural element.

In one form, the lever mechanism comprises a lever arm from which the tethering means depends, and a load arm operatively associated with tensioning the or each shoulder strap. In one form, responsive to any loading of the tethering means, this load arm bears against the or each shoulder strap to take up slack and thereby tension the or each shoulder strap.

In one form, the mechanical linkage comprises a cam element having an axis of rotation positioned at or about an axis of elongation of the structural element, and about which the shoulder strap wraps. In one form, responsive to any loading of the tethering means, the or each shoulder strap is caused to be wrapped around the cam element to take up slack and thereby tension the or each shoulder strap.

In one form, the mechanical linkage comprises both the lever arm and the cam element. In this way, the load arm can be employed to wrap the or each tether strap around the cam element.

In one form, the link means is further operative to create a load path which substantially bypasses the body and transfers loads borne by the or each shoulder strap to the tethering means.

According to a further aspect, there is provided a child restraint comprising a body, a safety harness including at least one shoulder strap for securing an occupant to the body, a tethering means for anchoring the child restraint with respect to an anchor point, and a link means for linking the or each shoulder strap to the tethering means, and wherein the link means is operative to tension the or each shoulder strap responsive to any loading of the tethering means.

In one form, the tethering means is a tether strap further comprising a connecting component to connect to the vehicle anchorage point.

In one form, the tether strap is a split tether strap.

### BRIEF DESCRIPTION OF DRAWINGS

For a better understanding of this disclosure it will now be described with respect to an exemplary embodiment which shall be described herein with the assistance of drawings wherein:

Figure 1 is a front elevation of a child safety seat in accordance with a first embodiment of the invention;

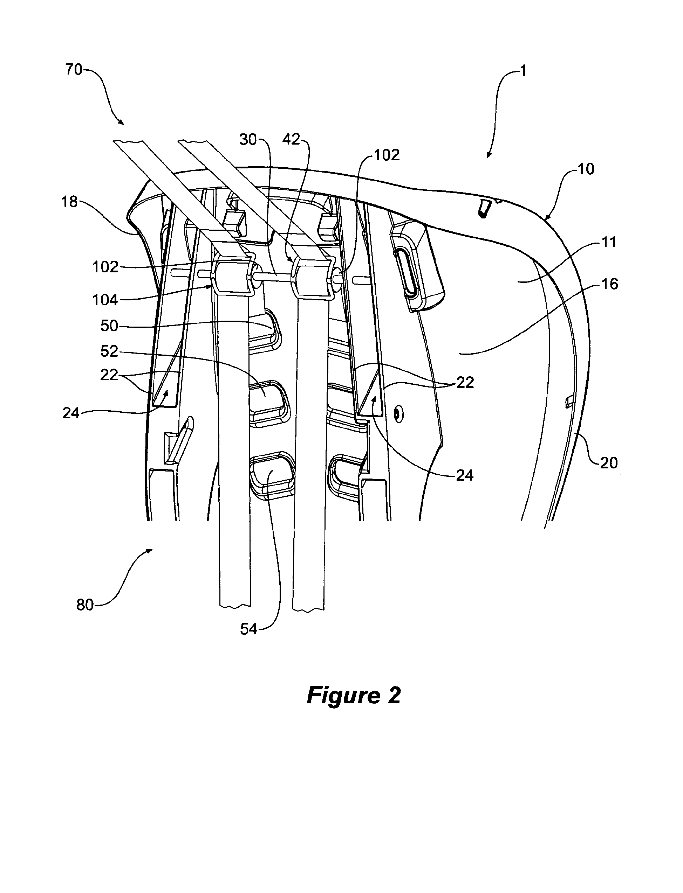

Figure 2 is a rear elevation of the child safety seat illustrated in Figure 1; and

Figures 3 and 4 are detail views of link means for the child safety of Figures 1 and 2.

In the following description, like reference characters designate like or corresponding parts throughout the several views of the drawings.

### DESCRIPTION OF EMBODIMENTS

The present invention will be described below in relation to a Type-B and/or E child safety seat 10 for use in a vehicle in a forward facing manner. However, it will be appreciated that the present invention could be equally applicable for use in a variety of different modes of child safety seats, including Type A/B, Type A/B/E etc, and still fall within the spirit of the present invention.

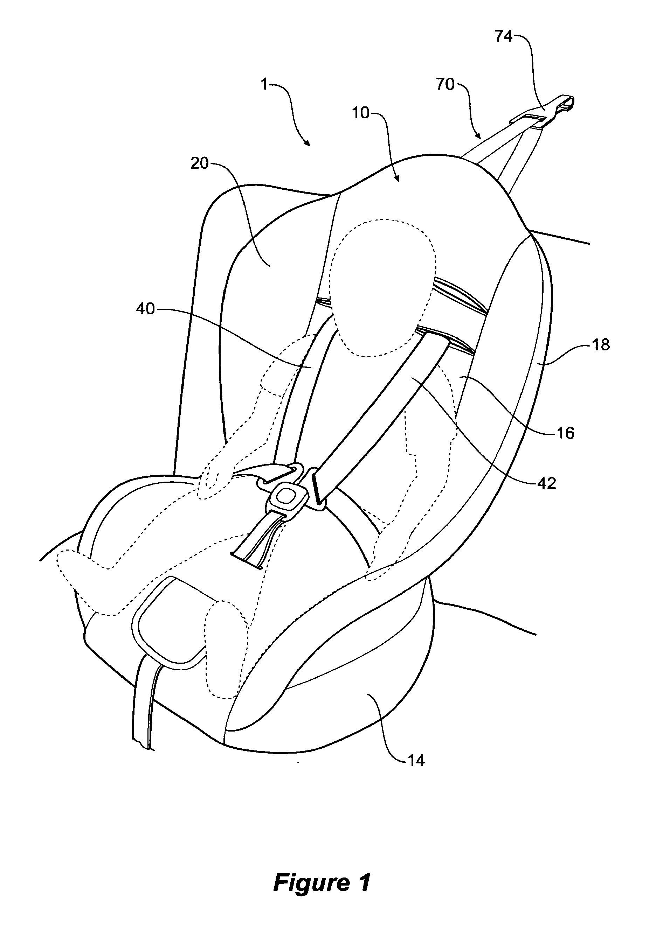

Referring now to Figure 1, where there is illustrated a child restraint, which in this case is a child safety seat 1 comprising a body 10 comprising a seat base portion 14, seat back portion 16 and side walls 18 and 20.

The body 10 is moulded, such as by injection moulding, of an engineering plastic material such as polypropylene.

The seat base portion 14 and seat back portion 16 can be integrally formed, or separately formed and assembled to form the body 10.

The body 10 comprises two structural forms, in the form of two pairs of ribs 22, extending from a rear of the seat back portion 16 so as to define between them a pair of spaced apart channels 24.

A reinforcing structural element in the form of a steel bar 30 extends laterally across the seat back portion 16, passing through the two pairs of ribs 22 and the channels 24 as it does so. More specifically, the steel bar 30 has been moulded into the ribs 22.

The child safety seat 1 comprises a harness for a child occupant, consisting of a pair of shoulder straps 40 and 42, a pair of lap straps and a crotch strap. The straps are interconnected by a buckle. The seat back portion 16 has three sets of slots 50, 52 and 54 to provide alternative positions for attaching the shoulder straps 40 and 42. Behind the seat back 16, the shoulder straps 40 and 42 extend over reinforcing bar 30 and partway down the rear of the seat back portion 16 before being connected to a yoke which is in turn connected to an adjuster strap extending to a strap adjuster mounted on the seat body 10 below the front edge of the seat portion 14.

In an alternate embodiment (not illustrated), the shoulder straps provide loops through which a vehicle lap belt may pass so that the shoulder straps and lap belt work cooperatively to restrain the seat occupant.

Passing the shoulder straps 40 and 42 over the reinforcing bar 30 allows for an additional length of shoulder straps 40 and 42 for length adjustment thereof to suit both the smallest and largest possible occupants. In cases where such adjustability is not required, the shoulder straps 40 and 42 may connect directly to (such as by looping around) reinforcing bar 30.

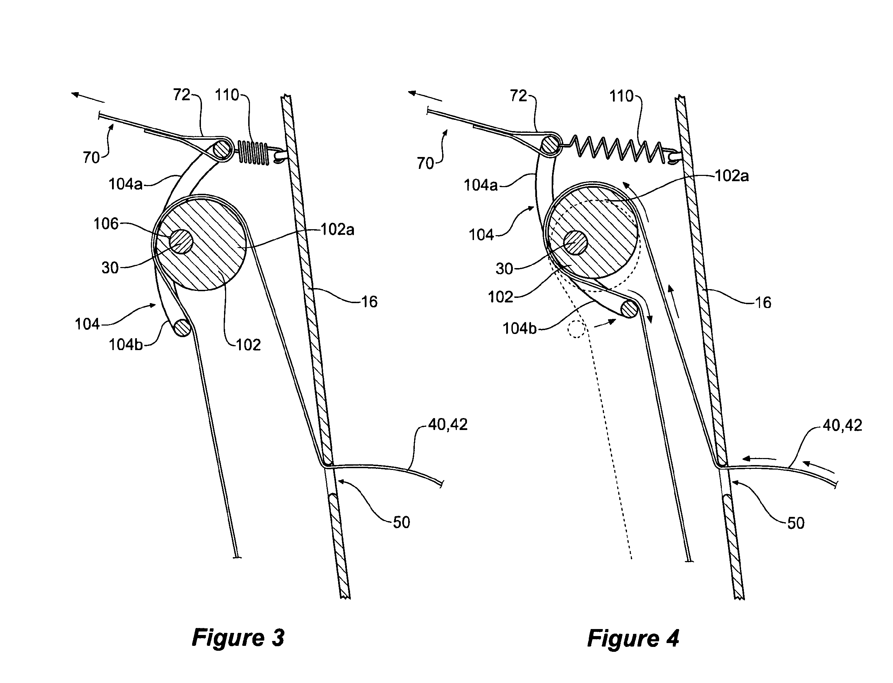

Referring now to Figures 3 and 4, where the tethering means comprises a split tether strap 70 (although a single tether strap 80 can be used) which is connected to a vehicle anchorage point through a latching hook connector 74 disposed on the strap 70. The length of the tether strap 70 can be adjusted via an adjustable buckle, to suit different vehicles. See PCT/AU2005/000820, the full content of which should be considered incorporated herein by way of reference, for a full discussion of split tether straps.

The tether strap 70 comprises a pair of looped ends 72, each of which depend from a lever arm 104 of a link element 100 of forged or formed steel, or which may be a fabricated construction.

In use, any load borne by the shoulder straps 40 and 42 as a result of vehicle deceleration, acceleration or accident, is transferred via a load path which extends via the steel bar 30, the link elements 100 and the tether strap 70 to the vehicle anchorage point, with relatively little to no load being borne by the body 10 of the child safety seat 1, which has been bypassed.

In addition to the lever arm 104, each link element 100 comprises a generally cylindrical body 102 having a non-concentrically located hole 106 there through, so that the body 102 can be rotatably disposed on the reinforcing bar 30 to act as a cam element.

The lever arm 104 comprises portions extending above and below the body 102 so that in use there is an upper lever arm portion 104a and a lower lever arm portion 104b (or load arm).

Harness straps 40 or 42 can extend over and around the body 102 of link element 100, down past the lower lever arm portion 104b to the yoke.

A looped end 72 of the tether strap 70 is attached to an uppermost end of the uppermost lever arm portion 104a (lever arm).

The eccentricity of the through hole 106 relative to the cylindrical body 102 results in the creation of a cam lobe portion 102a on the opposing side of the cylindrical body 102.

In the event of a front-impact accident, the child safety seat 1 loads the tether strap 70 (or 80), placing this in tension, and this is converted into a counter-clockwise rotation of the link element body 102 as viewed in Figure 9, thus wrapping the harness strap 40 or 42 around the cam lobe portion 102a of the body 102 and driving the lower lever arm portion 104b forward as illustrated in Figure 10, these combined actions co-acting to tension the harness strap 40 or 42 and pull the child firmly back against the seat back of the child safety seat 1. This further reduces undesirable head excursion.

Optionally the child safety seat 1 comprises a spring 110 (or other biasing means) to counter the tightening force that can be applied to the tether strap 70 during installation. This spring 110 could be a coil spring as illustrated, or another type of suitable spring.

An advantage of this arrangement is that the attachment means (ie. link elements 100 and reinforcement bar 30) comprise tensioning means operative to further tighten the harness straps 40 and 42 in response to the transfer of load to the tethering means (ie. tether strap 70).

It will be apparent that either of the cam lobe 102a or lower lever arm portion 104b action may be optimised to effect sufficient harness strap 40 or 42 tensioning as to render the other redundant, but they have been described together in the above embodiment to avoid unnecessary repetition herein.

It will also be apparent that the above described embodiment can also be configured for a single tether strap 80.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that various modifications can be made without departing from the principles of the invention. Therefore, the invention should be understood to include all such modifications in its scope.

## Claims

1. A child restraint comprising a body, a safety harness including at least one shoulder strap for securing an occupant to the body, and a link means for linking the shoulder strap to a tethering means for anchoring the child restraint with respect to an anchor point, and wherein the link means is operative to tension the or each shoulder strap responsive to any loading of the tethering means.

2. The child restraint of claim 1, wherein the safety harness comprises a pair of shoulder straps, and the link means is operative to tension both shoulder straps responsive to any loading of the tethering means.

3. The child restraint as in either of the preceding claims, wherein the link means comprises a reinforcement means operative to reinforce the body of the child restraint.

4. The child restraint as in any one of the preceding claims, wherein the link means comprises a structural element.

5. The child restraint as in any one of the preceding claims, wherein the body is a seat body.

6. The child restraint of claim 5, wherein the body comprises a base portion and a seat back portion, and where the link means is associated with seat back portion.

7. The child restraint of claim 6, wherein the link means comprises an elongate structural element which extends transversely across at least a portion of the seat back portion of the body.

8. The child restraint as in any one claims 4 through 7, wherein the structural element comprises a rod or bar.

9. The child restraint as in any one claims 4 through 8, wherein the tethering element attaches with respect to the structural element, and the or each shoulder strap at least extends over the structural element.

10. The child restraint, wherein the tethering means comprises a tether strap.

11. The child restraint of claim 10, wherein the tether strap is a split tether strap.

12. The child restraint as in any one of the preceding claims, wherein the body is molded from an engineering plastic.

13. The child restraint as in any one of claims 4 through 12, wherein the link means comprises attachment means operative to attach the tethering means to the structural element.

14. The child restraint of claim 13, wherein the attachment means comprises tensioning means operative to tighten the or each shoulder strap in response to the transfer of load to the tethering means.

15. The child restraint of claim 14, wherein the tensioning means comprises a mechanical linkage.

16. The child restraint of claim 15, wherein the mechanical linkage comprises a lever mechanism having a fulcrum positioned at or about an axis of elongation of the structural element.

17. The child restraint of claim 16, wherein the lever mechanism comprises a lever arm from which the tethering means depends, and a load arm operatively associated with tensioning the or each shoulder strap.

18. The child restraint as in any one of claims 15 through 17, wherein the mechanical linkage comprises a cam element having an axis of rotation positioned at or about an axis of elongation of the structural element, where this cam element is operatively associated with tensioning the or each shoulder strap.

19. The child restraint as in either of claims 17 or 18, wherein the mechanical linkage comprises both the lever arm and the cam element.

20. The child restraint as in any one of the preceding claims, wherein the link means is further operative to create a load path which substantially bypasses the body and transfers loads borne by the or each shoulder strap to the tethering means.

21. A child restraint comprising a body, a safety harness including at least one shoulder strap for securing an occupant to the body, a tethering means for anchoring the child restraint with respect to an anchor point, and a link means for linking the or each shoulder strap to the tethering means, and wherein the link means is operative to tension the or each shoulder strap responsive to any loading of the tethering means.
